# FASCICULE DE BREVET EUROPEEN

(11) **EP 1 144 422 B1**
(45) Date de publication et mention de la délivrance du brevet: **20.11.2002**
(21) Numéro de dépôt: 00900593.5
(22) Date de dépôt: 17.01.2000
(51) Int. Cl.: C07F 9/655, G21C 19/46, C22B 3/00

(54) **DERIVES DE CALIXARENES POUR L'EXTRACTION DES ACTINIDES**
CALIXAREN-DERIVATE FÜR EXTRAKTION VON AKTINIDEN
CALIXARENE DERIVATIVES FOR EXTRACTING ACTINIDES

(30) Priorité: 18.01.1999 FR 9900442
(43) Date de publication de la demande: 17.10.2001
(73) Titulaire: COMMISSARIAT A L'ENERGIE ATOMIQUE, 75752 Paris Cédex 15 (FR)
(72) Inventeur: DOZOL, Jean-François, F-04660 Pierrevert (FR); ROUQUETTE, Hélène, F-04100 Manosque (FR); GARCIA CARRERA, Alejandro, F-13100 Aix en Provence (FR); DELMAU, Laetitia, F-13014 Marseille (FR); BOHMER, Volker, D-55126 Mainz (DE); SHIVANYUK, Alexander, D-55126 Mainz (DE); MUSIGMANN, Christian, D-55126 Mainz (DE)
(74) Mandataire: Audier, Philippe André
(86) Numéro de dépôt international: FR0000085
(87) Numéro de publication internationale: WO00042051

(56) Documents cités:
- WO-A-94/12502
- WO-A-94/24138
- WO-A-96/23800
- CHEMICAL ABSTRACTS, vol. 090, no. 23, 4 juin 1979 (1979-06-04) Columbus, Ohio, US; abstract no. 185911, YATSIMIRSKII K B ET AL: "Proton NMR study of phosphonyl-containing macrocyclic polyesters using lanthanide shift reagents" XP002117922 & DOKL. AKAD. NAUK SSSR (DANKAS,00023264);1979; VOL.244 (5); PP.1142-5 [CHEM.], Inst. Fiz. Khim. im. Pisarzhevskogo;Kiev; USSR

## Description

### Domaine technique

La présente invention a pour objet de nouveaux dérivés de calixarènes, leur procédé de préparation et leur utilisation pour l'extraction des actinides et des lanthanides.

De façon plus précise elle concerne des calixarènes comportant un substituant phosphinoxydo acétamide, qui présentent des propriétés intéressantes pour l'extraction des actinides et des lanthanides, notamment des actinides et lanthanides trivalents.

Ces nouveaux calixarènes sont donc utilisables pour l'extraction des actinides et des lanthanides présents dans des solutions aqueuses telles que les effluents aqueux provenant d'installations de retraitement de combustibles nucléaires usés ou les solutions de dissolution de combustibles nucléaires usés.

### État de la technique antérieure.

On a déjà envisagé d'utiliser des ligands macrocycliques tels que des calixarènes comportant un substituant phosphinoxydo-acétamide, pour extraire des métaux tels que les lanthanides et les actinides, à partir de solutions aqueuses, comme il est décrit dans WO-A-96/23800 [1].

Dans ces dérivés, le substituant phosphinoxydo-acétamido est disposé directement sur les cycles phényle du calixarène et ces cycles phényle sont également substitués par des groupes alcoxy, par exemple de 5 à 18 atomes de carbone.

On connaît aussi par le document FR-A-2 698 362 [2] des calix[4]arènes-bis-couronnes comportant deux ponts ether-couronnes entre deux noyaux benzéniques opposés 1 et 3, et 2 et 4. Ces derniers sont utiles en particulier pour extraire sélectivement le césium.

Le document WO 94/24138 divulgue des calix[4]arènes-couronnes comportant un pont ether-couronne entre deux noyaux benzéniques opposés 1 et 3, et 2 et 4. Ils sont utiles pour extraire sélectivement le césium ou les actinides.

Bien que l'efficacité de ces calixarènes pour l'extraction des actinides et lanthanides ou du césium soit satisfaisante, des recherches ont été poursuivies pour améliorer encore les performances des calixarènes pour l'extraction des actinides et lanthanides trivalents.

### Exposé de l'invention

La présente invention a pour objet de nouveaux dérivés de calixarènes comportant un substituant phosphinoxydo-acétamido, qui présentent de meilleures performances que les calixarènes décrits dans les documents [1] et [2].

Selon l'invention, le calixarène répond à la formule : 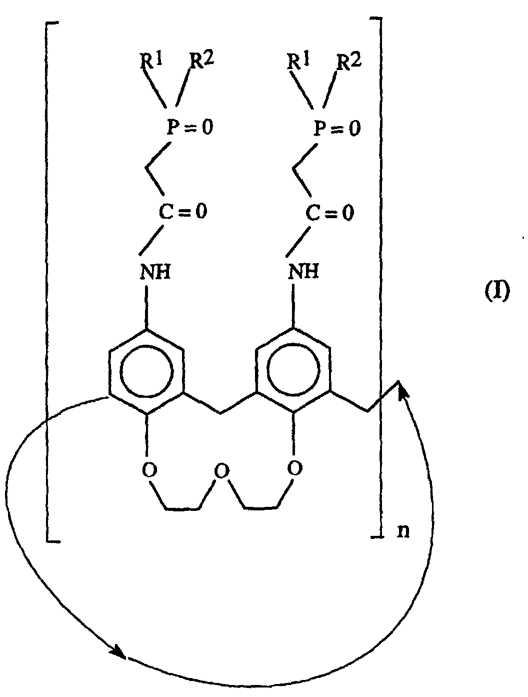 dans laquelle R¹ et R² qui peuvent être identiques ou différents, sont des groupes alkyle, alcoxy ou aryle, et n est un nombre entier égal à 2, 3 ou.4.

Dans ce calixarène, la présence des ponts éthers-oxydes entre noyaux benzéniques adjacents rigidifie la structure du calixarène et le rend plus efficace pour l'extraction des actinides et lanthanides trivalents.

Dans la formule (I) donnée ci-dessus R¹ et R² peuvent être des groupes alkyle, alcoxy ou aryle. Les groupes alkyle et alcoxy peuvent être linéaires ou ramifiés, et ont de préférence de 1 à 18 atomes de carbone. Les groupes aryle utilisables pour R¹ et R² sont des groupes monovalents dérivés d'un noyau aromatique ou hétérocyclique par enlèvement d'un atome d'hydrogène à l'un des atomes de carbone du cycle. A titre d'exemple de tels groupes, on peut citer les groupes phényle, naphtyle, pyridyle, thiophényle et phényle substitué.

De préférence, R¹ et R² représentent chacun un groupe phényle ou un groupe alcoxy, par exemple éthoxy, ou R¹ représente le groupe phényle et R² représente un groupe alcoxy, par exemple éthoxy.

Les calixarènes de l'invention peuvent comporter de 4, 6 ou 8 cycles phényle. De préférence, le calixarène comprend 4 cycles phényle (n = 2).

Les calixarènes de formule (I) de l'invention peuvent être préparés par un procédé comprenant les étapes suivantes :
a) nitration d'un calixarène de formule : 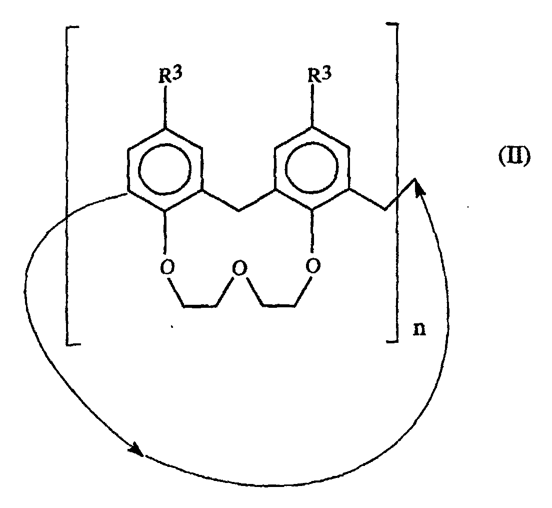 dans laquelle R³ représente un groupe alkyle et n est tel que défini ci-dessus, pour obtenir le dérivé nitro de formule : 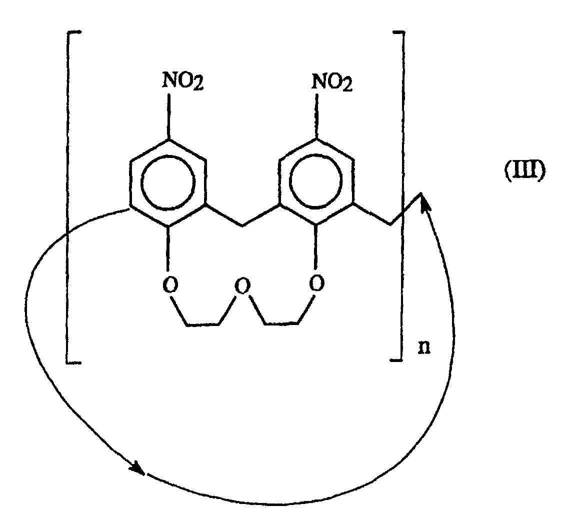
b) réduction du dérivé nitro de formule (III) en dérivé amino de formule : 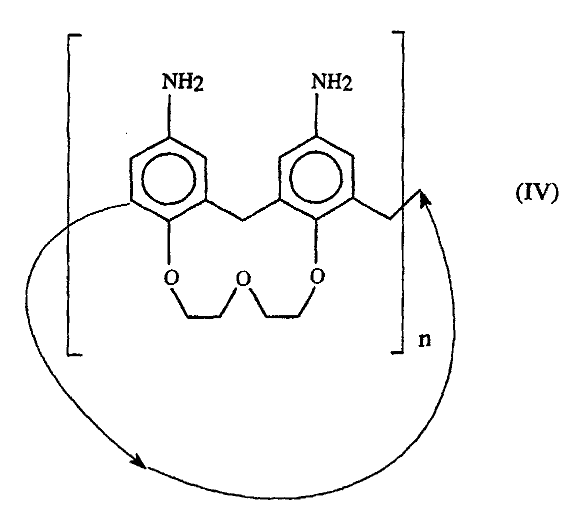
c) réaction du dérivé amino de formule (IV) avec un phosphinoxydo acétate de formule : 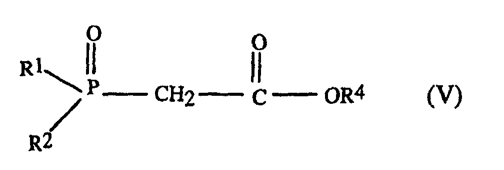
dans laquelle R¹ et R² sont tels que définis ci-dessus, et R⁴ représente le groupe p-nitrophényle ou 2,4-dinitrophényle.

Le phosphinoxydoacétate de formule (V) utilisé dans la dernière étape peut être préparé à partir du phosphinite d'alkyle correspondant de formule : 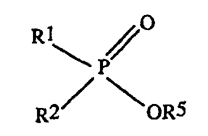 où R¹ et R² ont les significations données ci-dessus et R⁵ est un groupe alkyle possédant 1 à 4 carbones, par réaction de celui-ci avec du bromoacétate d'éthyle, suivie d'une hydrolyse et de l'estérification de l'acide obtenu avec du nitrophénol ou du dinitrophénol.

Selon une variante de réalisation, les calixarènes de formule (I) dans laquelle R¹ et/ou R² sont un groupe alcoxy, peuvent être préparés par un procédé comprenant les étapes suivantes :
a) nitration d'un calixarène de formule : 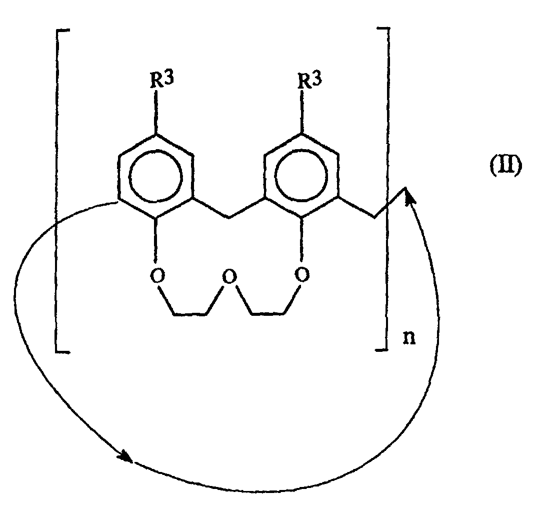 dans laquelle R³ représente un groupe alkyle et n est tel que défini ci-dessus, pour obtenir le dérivé nitro de formule : 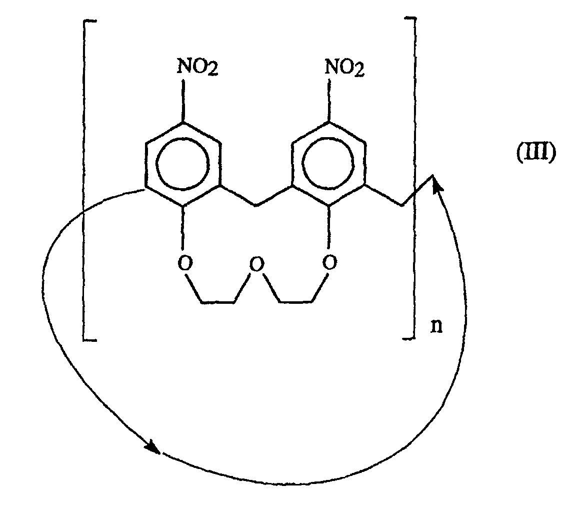
b) réduction du dérivé nitro de formule (III) en dérivé amino de formule : 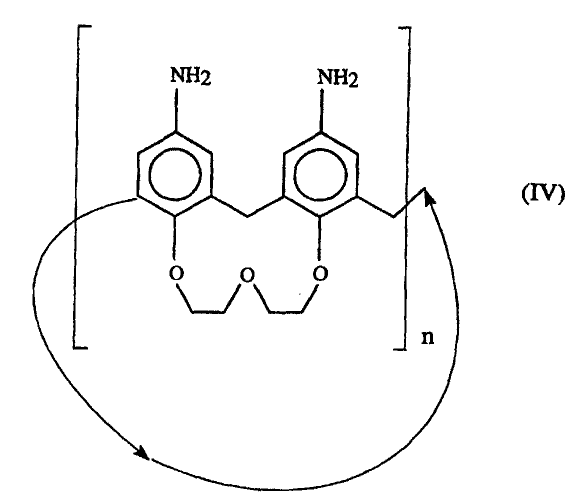
c) réaction du dérivé amino de formule (IV) avec du chlorure de bromoacétyle de formule :

   BrCH₂COCl (VI)

   pour obtenir le dérivé de calixarène de formule : 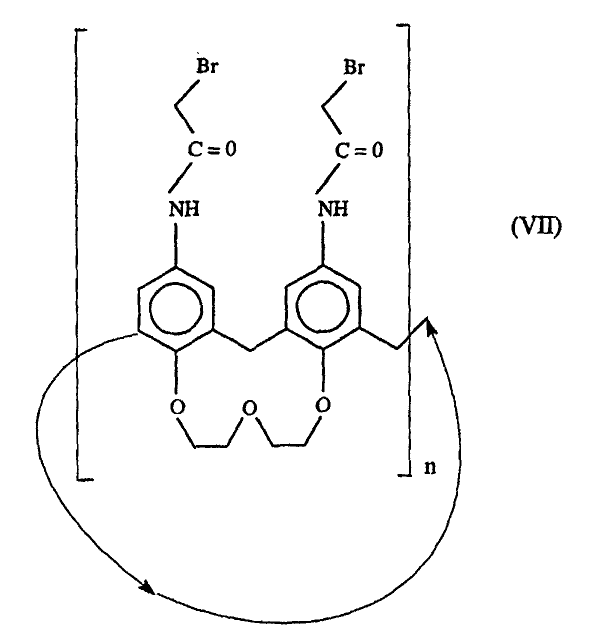
d) réaction du dérivé de formule (VII) avec un phosphonate ou phosphinate de formule :

   R¹ - P - (R²)₂ (VIII)
dans laquelle R¹ est un groupe alkyle, alcoxy ou aryle et R² est un groupe alcoxy.

Les calixarènes de formule (I) de l'invention peuvent être utilisés pour séparer au moins un métal choisi parmi les actinides et les lanthanides présents dans une solution aqueuse, notamment une solution acide telle que les solutions de dissolution et les effluents aqueux provenant d'installations de retraitement de combustibles nucléaires usés.

La solution aqueuse peut être une solution nitrique contenant 1 à 4 mol/l de HNO₃.

Pour réaliser cette séparation, on met en contact la solution aqueuse contenant le ou les métaux à séparer avec une phase immiscible comprenant au moins un calixarène répondant à la formule (I) donnée ci-dessus, pour extraire le (les) métal (métaux) dans la phase immiscible.

Cette phase immiscible est généralement constituée par une solution du ou des calixarènes de l'invention dans un solvant organique approprié.

A titre d'exemple de solvants utilisables, on peut citer les alkyl benzènes et les nitrophényl alkyl éthers.

De préférence, on utilise comme solvant un éther tel que l'ortho-nitrophényl hexyl éther.

La concentration en calixarène de la phase liquide immiscible dépend en particulier du solvant utilisé. On peut utiliser des concentrations allant de 5.10⁻⁵ à 10⁻³ mol/l, par exemple une concentration de 10⁻³ mol/l.

Pour mettre en oeuvre le procédé de séparation de l'invention, on peut effectuer la mise en contact de la solution aqueuse avec cette phase liquide immiscible dans des installations classiques d'extraction liquide-liquide telles que des mélangeurs-décanteurs, des extracteurs centrifuges, des colonnes pulsées etc., mais aussi au moyen de membranes liquides supportées.

La technique des membranes liquides supportées, consiste à immobiliser la phase liquide immiscible sur un support solide tel que le polypropylène. En utilisant cette technique, on peut transférer les métaux à séparer de la solution aqueuse dans laquelle ils se trouvent, dans une solution aqueuse de réextraction. Dans ce cas, l'une des faces de la membrane est en contact avec la première solution aqueuse contenant les métaux à séparer et l'autre face est en contact avec une solution aqueuse de réextraction.

Le support de la membrane liquide supportée peut être une membrane microporeuse dont les pores sont remplis de calixarène en solution dans un solvant organique approprié. Cette membrane microporeuse peut être en polypropylène, en fluorure de polyvinylidène ou en polytétrafluoréthylène. Cette membrane peut servir de séparation entre un premier compartiment dans lequel se trouve la solution aqueuse contenant les métaux à séparer et un deuxième compartiment dans lequel se trouve la solution aqueuse de réextraction.

Pour obtenir une bonne extraction avec les membranes liquides supportées, il est avantageux d'utiliser des membranes ayant une faible épaisseur, une grande porosité et un petit diamètre de pores. Ces membranes peuvent être utilisées sous la forme de modules tels que les modules d'ultra ou de microfiltration à membranes planes ou à fibres creuses, qui permettent de traiter des débits importants de fluide.

Après extraction du ou des métaux à séparer dans la phase liquide immiscible, on peut récupérer ceux-ci par réextraction dans une solution aqueuse de réextraction. Cette solution peut être une solution aqueuse de complexant. Le complexant peut être un acide organique ou un sel d'acide organique tel que l'acide méthylène diphosphonique, l'acide oxalique, l'acide citrique, les oxalates et les citrates. L'emploi de telles solutions permet d'obtenir la réextraction des métaux séparés avec des rendements élevés.

D'autres caractéristiques et avantages de l'invention apparaîtront mieux à la lecture des exemples suivants en référence aux dessins annexés.

### Brève description des dessins

La figure 1 (1A et 1B) est un schéma de synthèse des calixarènes de formule (I) selon un premier mode de réalisation de l'invention.

La figure 2 (2A et 2B) est un schéma de synthèse des calixarènes de formule (I) selon un second mode de réalisation de l'invention.

### Exposé détaillé des modes de réalisation

Les exemples 1 à 3 illustrent la préparation de calixarènes répondant à la formule (I) donnée ci-dessus, avec R¹ et R² représentant le groupe phényle Ph (exemple 1), R¹ représentant le groupe éthoxy et R₂ représentant le groupe phényle (exemple 2) et R¹ et R² représentant le groupe éthoxy (exemple 3).

### Exemple 1 : Préparation du tétrakis (3-diphényl-phosphinoxydo acétamido)-bis-couronne-3-calix[4]arène (composé 1).

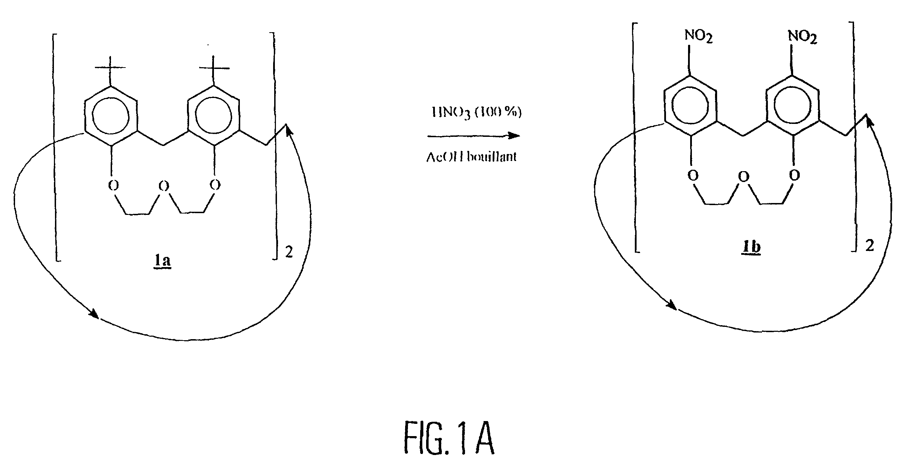

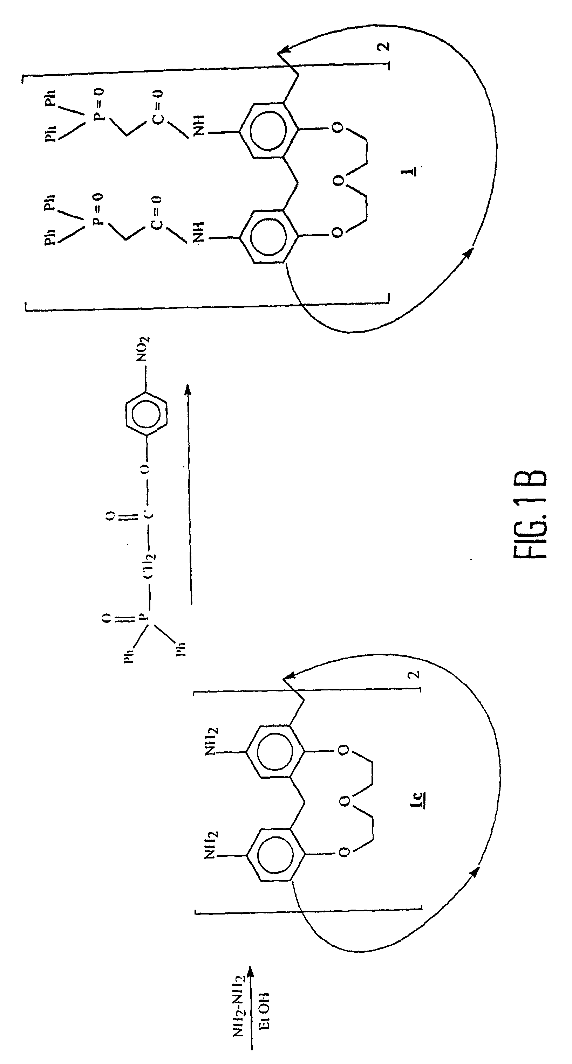

Pour cette synthèse on suit le schéma réactionnel représenté sur la figure 1, en partant du composé **1a** le tétrakis-tert-butyl-bis-couronne-3-calix[4]arène qui a été préparé comme il est décrit par A. Arduini et al dans J. Org. Chem., 1995, 60, p. 1454-1457 [3].

### a) Préparation du dérivé nitré du bis-couronne-3-calix[4]arène (composé 1b)

On dissout 0,2 g du calixarène **1a** dans 7 ml d'acide acétique glacial en chauffant à environ 100°C. On ajoute à cette solution en une seule fois 5 à 7 ml de HNO₃ à 100 %. La réaction se produit immédiatement et un précipité incolore se forme en 3 à 5 minutes.

Après 10 à 20 minutes d'agitation, on sépare le précipité de composé **1b** par filtration et on le lave à l'acide acétique glacial (2 x 5 ml), puis au méthanol (5 ml), et on le sèche sous vide.

Afin d'éliminer les traces d'acide acétique, on dissout le composé **1b** dans un mélange d'alcool éthylique et de toluène et on évapore la solution sous vide.

On répète cette opération 3 fois et on sèche ensuite le produit solide incolore sous vide poussé à 60°C, pendant 2 heures. On obtient ainsi le composé **1b** avec un rendement de 40 %.

Le spectre de résonance magnétique nucléaire de ce composé est en accord avec celui donné par Arduini et al, Tétrahédron, 1996, 52, p. 6011-6018 [4].

### b) Préparation du tétrakis-amino-bis-couronne-3-calix[4]arène (composé 1c)

On ajoute en une seule fois 5 ml d'hydrazine N₂H₄, H₂O à une suspension de 0,3 g du composé **1b** et 0,3 g de nickel de Raney dans 30 ml d'alcool éthylique. Avant son utilisation, le nickel de Raney a été lavé avec de l'alcool éthylique.

On porte le mélange au reflux pendant 8 heures en ajoutant périodiquement N₂H₄, H₂O (5 ml toutes les deux heures). Après environ 3 heures, la suspension est complètement dissoute. On évapore le mélange réactionnel sous vide et on dissout le résidu dans 10 ml d'un mélange alcool éthylique : toluène (1 : 1) et on évapore sous vide la solution obtenue pour éliminer l'eau. On répète cette opération 3 fois et on dissout le résidu dans de l'alcool éthylique et on précipite avec de l'hexane. On obtient le composé **1c** avec un rendement de 95 %.

Les données du spectre de résonance magnétique nucléaire de ce composé sont en accord avec celles figurant dans la référence [3] citée précédemment.

### c) Préparation du composé 1

A une suspension de 0,2 g (0,32 mmol) du composé **1c** dans 20 ml de toluène sec, on ajoute en une seule fois 3 ml de triéthyl amine, puis 0,7 g (1,8 mmol) de l'ester actif p-nitrophényl(di-phénylphosphoryl) acétate. On soumet le mélange réactionnel à une agitation vigoureuse à la température ambiante pendant 5 heures. Pendant cette opération, le mélange réactionnel devient jaune et après 3 heures il se forme un précipité analogue à de l'huile d'une couleur jaunâtre. Après 8 heures d'agitation, on ajoute 80 ml de CH₂Cl₂ au mélange réactionnel pour dissoudre le précipité. On lave la solution avec NaOH 1M (3 x 50 ml), pour que la couche aqueuse soit incolore, puis avec de l'eau déminéralisée (2 x 50 ml). On évapore la solution sous vide. On dissout le produit obtenu dans un mélange alcool éthylique-toluène et on évapore sous vide pour éliminer l'eau. On dissout le produit cristallin obtenu dans CH₂Cl₂, et on le reprécipite 2 fois avec de l'hexane. Finalement, on sèche le produit incolore obtenu, sous vide poussé, à 60°C, pendant 4 heures pour éliminer le reste des solvants.

On obtient le composé **1** avec un rendement de 62 %, les caractéristique de ce composé sont les suivantes :
Point de fusion : 211-213 °C ;
¹H NMR (400 MHz, DMSO-d₆) δ 9,77 (s, 4H), 7,85-7,75(m, 16H), 7,60-7,46 (m, 24 H), 7,07 (s large, 4H), 7,02(s large, 4H), 4,88 (d, J = 12,2 Hz, 2H), 4,35 (d, J = 11,8 Hz, 2H), 4,22-4,07 (m, 12H), 3,68 (d, J= 14,0 Hz, 8H), 3,60-3,51 (m, 4H), 3,09 (d, J = 11,5 Hz, 2H), 3,01 (d, J = 11,8 Hz, 2H),
FD-MS m/z 1593,6 (23 %) [M' 1593, 6].

### Exemple 2 : Préparation du tétrakis (3-phényléthylphosphinato-acétamido)-bis-couronne-3-calix[4]arène (composé 2)

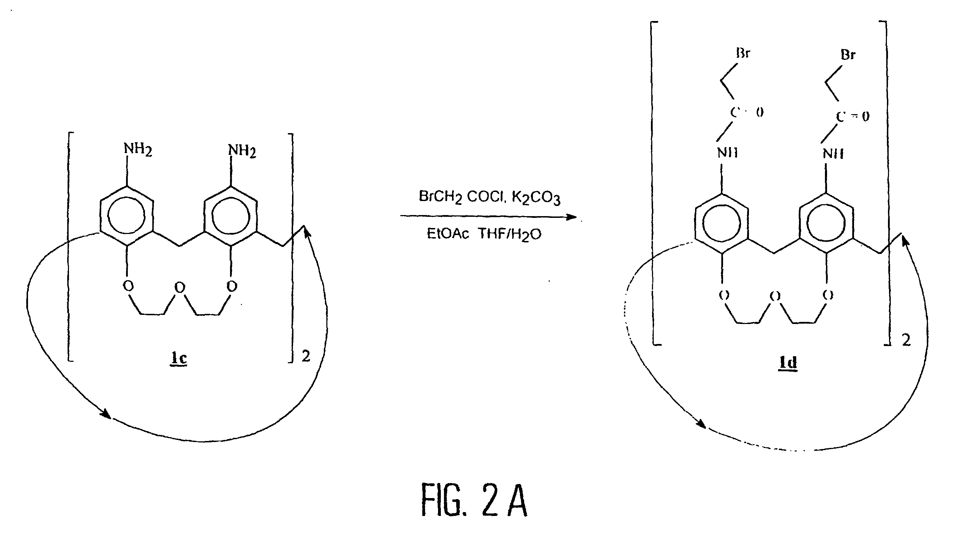

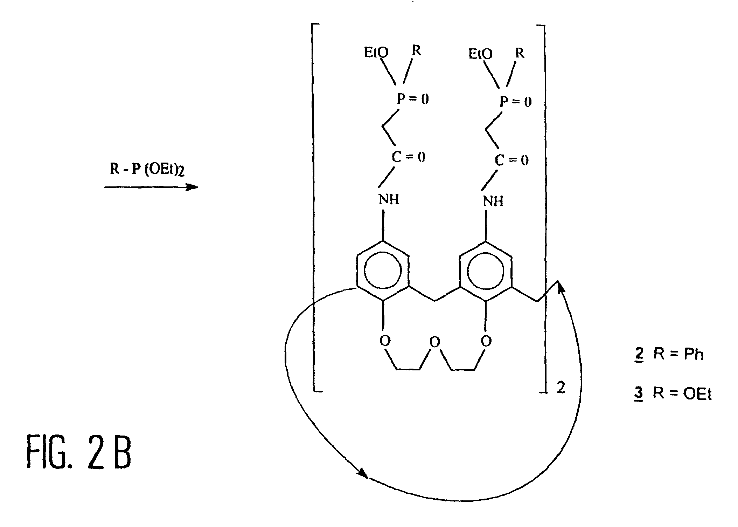

Pour cette préparation, on suit le schéma réactionnel représenté sur la figure 2 en partant du composé tétra-amino **1c** obtenu dans l'exemple 1.

### a) Préparation du tétrakis-bromo acétamido-bis-couronne-3-calix[4]arène (composé 1d).

A une solution de 0,4 g du composé tétra-amino **1c** dans un mélange de 5 ml de tétrahydrofuranne THF et de 10 ml d'acétate d'éthyle, on ajoute 20 ml d'une solution aqueuse 1 M de K₂CO₃. On ajoute en 3 fois 6 ml de chlorure de bromoacétyle sous agitation vigoureuse. On poursuit l'agitation du mélange réactionnel pendant 2 heures à la température ambiante, puis on ajoute 50 ml d'acétate d'éthyle, et l'on sépare les deux couches formées. On lave la couche organique avec de l'eau (3 x 50 ml), puis on la sèche sur Na₂SO₄ et on évapore sous vide. On obtient ainsi le composé **1d** sous de forme de solide incolore avec un rendement de 86 %.

Les caractéristiques du composé **1d** sont les suivantes :
Point de fusion : 249-251°C ;
¹H NMR (400 MHz, CDCl₃ DMSO-d₆ 10 : 1) δ : 9,47 (s, 4H), 7,05(s large, 4H) 7,03 (s large 4H), 4,79 (d, J = 12,0 Hz, 2H), 4,22 (d, J = 12,0 Hz, 2H), 4,10-3,40 (m, 16H), 3,00 (d, J = 12,0 Hz, 2H), 2,95 (d, J = 12,0 Hz, 2H),

### b) Préparation du tétrakis(3-éthyl-phénylphosphinato-acétamido)-bis-couronne-3-calix[4]arène (composé 2)

A une solution de 0,2 g du tétrabromoacétamide **1d** dans 10 ml de THF, on ajoute 10 ml de phénylphosphinate d'éthyle PhP(OEt)₂, et on soumet le mélange réactionnel à une agitation à 70°C pendant 64 heures sous atmosphère d'azote. On verse le milieu réactionnel dans 100 ml d'hexane. On sépare le précipité formé par filtration et on le lave avec de l'hexane. On reprécipite 2 fois dans une mélange THF-hexane, ce qui donne le composé **2** analytiquement pur sous forme de solide incolore avec un rendement de 58 %.

Les caractéristiques du composé 2 sont les suivantes :
Point de fusion : 157-162°C
¹H NMR (400 MHz, DMSO d₆) δ : 9,75-9,68 (m, 4H), 7,85-7,42 (m, 20H), 7,10, 7,05, 7,00 (3 s large, 8H), 4,91 (d large, J = 12,5 Hz, 2H), 4,36 (d large, J = 11,3 Hz, 2H), 4,25-4,08 (m, 12H), 4,05-3,93 (m, 4H), 3,92-3,81 (m, 4H), 3,63-3,53 (m, 4H), 3,26-3,16 (m, 8H), 3,11 (d large, J = 11,3 Hz, 2H), 3,04 (d large, J = 11,3 Hz, 2H), 1,23-1,15 (m, 12H) ;
FD - MS m/z 1465, 2 (18 %) [M⁺ 1465,4]

### Exemple 3 : Préparation du tétrakis (diéthylphosphonato-acétamido)bis-couronne-3 calix[4]-arène (composé 3).

Pour préparer ce composé, on part du dérivé tétrabromoacétamide **1d** obtenu dans l'exemple 2.

Une solution de 0,2 g du tétrabromoacétamide **1d** dans 10 ml de P(OEt)₃ est soumise à une agitation à 70°C pendant 64 heures sous atmosphère d'azote. On verse la solution dans 50 ml d'hexane sous agitation. On sépare par filtration le précipité incolore qui s'est formé, et on le lave avec de l'hexane. Le produit brut contenant P(OEt)₃ est purifié de plus par reprécipitation à partir d'une solution de CH₂Cl₂ au moyen d'hexane. On obtient le composé **3** sous forme de solide incolore avec un rendement de 67 %.

Les caractéristiques du composé **3** sont les suivantes :
Point de fusion : 140-142°C ;
¹H NMR (200 MHz, DMSO d₆) δ : 9,76 (s, 4H), 7,19 (d, J = 2,0 Hz, 4H), 7,15 (d, J = 2,0 Hz, 4H), 4,96 (d, J = 11,5 Hz, 2H), 4,42 (J = 11,9 Hz, 2H), 4,30-3,86 (m, 28H), 3,72-3,50 (m, 28H), 3,16 (d, J = 13,5 Hz, 2H), 3,09 (J = 13,2 2Hz, 2H), 2,98 (d, J = 21,4 Hz, 8H), 1,20 (t, J = 7,0 Hz, 24H) ;
FD-MS m/z 1338,4 (17 %) [M⁺ 1337,2], 1360,3 (100 %) [M⁺ + Na 1360,2], 1376,3 (16%) [M + K]).

### Exemple 4

Dans cet exemple, on évalue l'efficacité du calixarène de l'exemple 1 (composé **1**) pour séparer les lanthanides trivalents Pm, Eu, Gd et Tb.

Dans ce but, on met en contact 3 ml d'une solution aqueuse de NaNO₃ 4M, HNO₃ 0,01 M contenant environ 10⁻⁶ mol/l de l'élément à séparer ( Eu, Gd, Tb) et environ 2.10⁻⁹ mol/l dans le cas de Pm avec 3 ml d'une solution organique constituée par du chloroforme contenant 10⁻⁴ mol/l du composé **1**.

On effectue la mise en contact dans un tube en polypropylène de 20 ml que l'on soumet à une agitation. Après 1 heure de mise en contact, on laisse décanter les deux phases et on détermine les concentrations en terre rare de chaque phase par spectrométrie γ ou par scintillation liquide (Pm).

On détermine alors le coefficient de distribution D qui correspond au rapport de la concentration de l'élément (terre rare) dans la phase organique sur la concentration du même élément dans la phase aqueuse. Les résultats obtenus sont donnés dans le tableau 1.

Dans le tableau 1, on a donné à titre comparatif les résultats obtenus avec le calixarène tétra-O-pentyltétrakis(diphényl phosphinoxydo acétamido) calix[4]arène (composé **8** du tableau 1 du document WO96/23800 [1]) lorsqu'on effectue le même essai mais en utilisant 10⁻³ mol de ce calixarène dans le chloroforme.

Les résultats du tableau 1 montrent que le calixarène de l'invention permet d'obtenir des coefficients de distribution du même ordre de grandeur que ceux obtenus avec le calixarène de l'art antérieur, mais dans ce cas, le calixarène de l'art antérieur est utilisé à une concentration 10 fois plus élevée.

### Exemple 5

Dans cet exemple, on évalue l'efficacité du calixarène de l'exemple 2 (composé **2**) pour séparer le lanthane, le cérium, le néodyme, le samarium, l'europium et l'américium, à partir de solutions aqueuses contenant l'un de ces éléments, l'acidité nitrique des solutions variant de 10⁻² mol/l à 4 mol/l.

Dans cet exemple, on met en contact 3 ml de chaque solution aqueuse contenant environ 10⁻⁵ mol/l de l'élément à séparer avec 3 ml d'une solution organique constituée par du nitrophénylhexyl éther (NPHE) contenant 10⁻³ mol/l du calixarène **2**. On effectue la mise en contact dans un tube en polypropylène de 20 ml que l'on soumet à une agitation. Après une 1 heure de mise en contact, on laisse décanter les deux phases et on compte l'activité de chaque phase par scintillation liquide ou par spectrométrie α ou γ.

On détermine alors le coefficient de distribution D qui correspond au rapport de l'activité de l'élément dans la phase organique sur l'activité du même élément dans la phase aqueuse.

Les résultats obtenus sont donnés dans le tableau 2.

### Exemple comparatif 1

Dans cet exemple, on suit le même mode opératoire que dans l'exemple 5 pour tester l'efficacité d'un calixarène de l'art antérieur pour séparer l'europium et l'américium.

Les résultats obtenus sont donnés dans le tableau 3.

Si l'on compare les résultats des tableaux 2 et 3, on remarque que le calixarène de l'invention est beaucoup plus efficace pour l'extraction de l'europium et de l'américium que le calixarène de l'art antérieur.

### Exemple 6

Dans cet exemple, on suit le même mode opératoire que dans l'exemple 5 pour tester l'efficacité du composé **3** pour la séparation des mêmes éléments. Les résultats obtenus sont donnés dans le tableau 4 joint.

### Exemple comparatif 2

Dans cet exemple, on suit le même mode opératoire que dans l'exemple 6 pour tester l'efficacité du calixarène de formule : 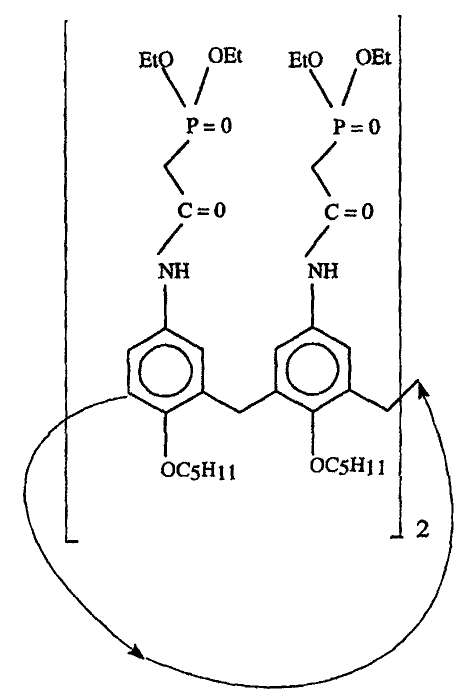 qui présente la même structure que le composé 3, mais sans les ponts éther-couronnes.

Dans ces conditions, pour des concentrations en HNO₃ allant de 10⁻² M à 4M, on obtient des coefficients de distribution D toujours inférieurs à 0,1, ce qui montre bien l'efficacité améliorée du calixarène de l'invention en raison de la présence des ponts éther-couronnes.

### Exemple comparatif 3

Dans cet exemple, on suit le même mode opératoire que dans l'exemple 5, mais on utilise comme phase liquide organique le CMPO à une concentration de 0,25 mol/l dans du nitrophényl hexyl éther pour effectuer la séparation des mêmes éléments. La formule du CMPO est la suivante :

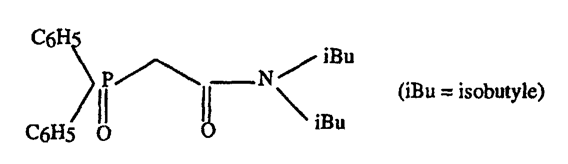

Les résultats obtenus sont donnés dans le tableau 5.

Si l'on compare les résultats du tableau 5 à ceux du tableau 2 concernant le calixarène **2**, on remarque que l'emploi de CMPO exige des concentrations beaucoup plus importantes (0,25 mol/l au lieu de 10⁻³ mol/l) pour obtenir des résultats du même ordre de grandeur.

Les calixarènes de l'invention sont donc beaucoup plus intéressants.

### Références citées

[1] : WO-A-96/23800.
[2] : FR-A-2 698 362.
[3] : A. Arduini et al dans J. Org. Chem., 1995, 100, p. 1454-1457 [3].
[4] : Arduini et al, tetrahedron, 1996, 52, p. 6011-6018.

**Tableau 1**

| **COEFFICIENTS DE DISTRIBUTION** | | | | |
|---|---|---|---|---|
| Phase organique | Pm | Eu | Gd | Tb |
| Calixarène 1 (10⁻⁴ M) dans CHCl₃ | 14,6 | 4,7 | 2,7 | 1,5 |
| Calixarène de l'art antérieur (10⁻³ M) dans CHCl₃ | 15,2 | 5,2 | 2,4 | 0,8 |

**Tableau 2**

| **COEFFICIENTS DE DISTRIBUTION Composé 2(10**^{**-3**}**M) dans NPHE** | | | | | | | |
|---|---|---|---|---|---|---|---|
| HNO₃ | 10⁻² M | 10⁻¹ M | 1M | 1,5M | 2M | 3M | 4M |
| La | 2,35 | 75 | 180 | 160 | 215 | 190 | 115 |
| Ce | 1,8 | 60 | 13,5 | 12 | 14 | 14 | 12 |
| Nd | 0,6 | 21 | 165 | 190 | 260 | 205 | 90 |
| Sm | 0,14 | 5,2 | 65 | 100 | 135 | 95 | 37 |
| Eu | 0,12 | 2,2 | 30 | 45 | 60 | 50 | 18 |
| Am | 0,73 | 25 | 250 | 370 | 405 | 305 | 115 |
| Cm | 0,31 | 8,7 | 77 | 75 | 78 | 95 | 200 |

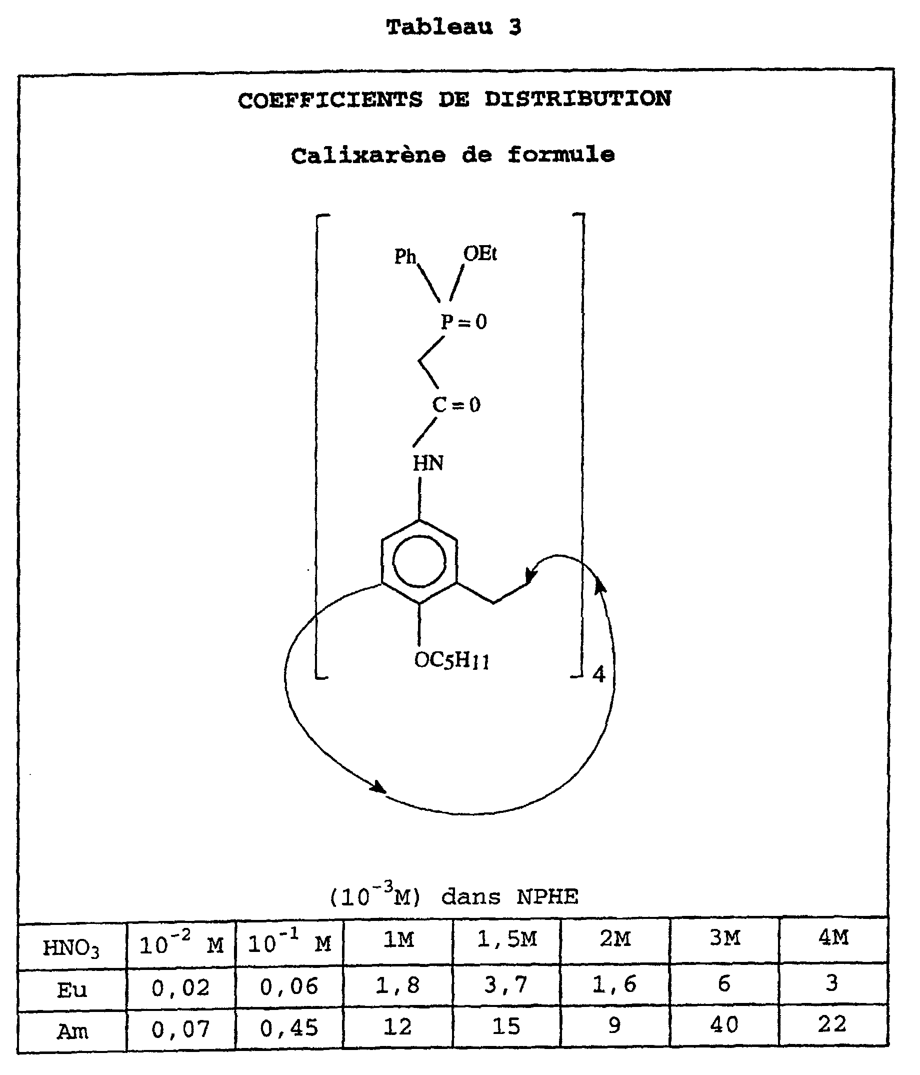

**Tableau 4**

| **COEFFICIENTS DE DISTRIBUTION** **Composé 3 (10**^{**-3**}**M) dans NPHE** | | | | | | | |
|---|---|---|---|---|---|---|---|
| HNO₃ | 10⁻² M | 10⁻¹ M | 1M | 1,5M | 2M | 3M | 4M |
| La | 0,28 | 0,41 | 2,25 | 3,7 | 5,05 | 5,55 | 5 |
| Ce | 0,28 | 0,42 | 2,2 | 3,6 | 4,8 | 5,3 | 5,1 |
| Nd | 0,29 | 0,32 | 1,15 | 1,85 | 2,65 | 3,15 | 3,25 |
| Sm | 0,27 | 0,28 | 0,48 | 0,85 | 1,4 | 1,65 | 2,25 |
| Eu | 0,27 | 0,28 | 0,29 | 0,56 | 1 | 1,25 | 1,75 |
| Am | 0,22 | 0,25 | 1,1 | 2,05 | 2,7 | 3,1 | 3,5 |

**Tableau 5**

| **COEFFICIENTS DE DISTRIBUTION** **CMPO (0,25M) dans NPHE** | | | | | | | |
|---|---|---|---|---|---|---|---|
| HNO₃ | 10⁻² M | 10⁻¹ M | 1M | 1,5M | 2M | 3M | 4M |
| La | 0,92 | 12,9 | 67 | 62 | 70 | 51 | 38 |
| Ce | 1,6 | 21 | 14 | 12,5 | 13 | 12,5 | 11,5 |
| Nd | 1,7 | 23 | 125 | 115 | 135 | 100 | 75 |
| Sm | 1,6 | 21 | 140 | 130 | 160 | 110 | 90 |
| Eu | 1,2 | 16 | 110 | 105 | 125 | 90 | 75 |
| Am | 2,5 | 35 | 200 | 155 | 195 | 150 | 105 |
| Cm | 1,7 | 26 | 90 | 95 | 52 | 50 | 68 |

## Revendications

1. Calixarène de formule : 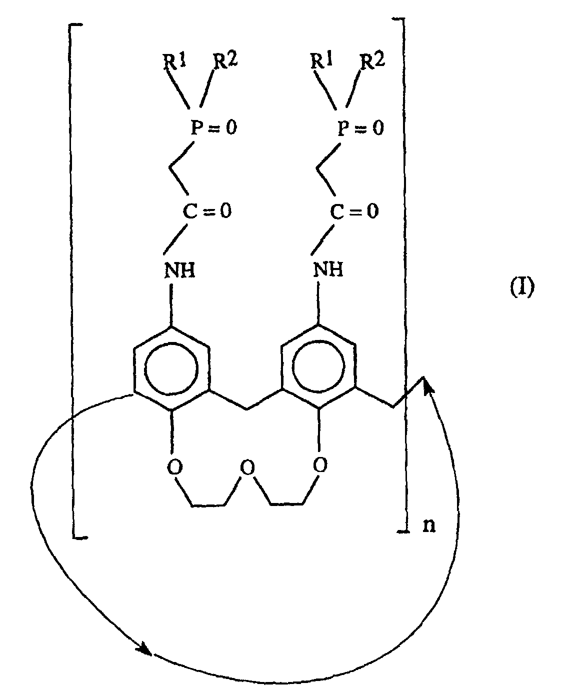 dans laquelle R¹ et R² qui peuvent être identiques ou différents, sont des groupes alkyle, alcoxy ou aryle, et n est un nombre entier égal à 2, 3 ou 4.

2. Calixarène selon la revendication 1, dans lequel n est égal à 2.

3. Calixarène selon la revendication 1 ou 2, dans lequel R¹ et R² représentent le groupe phényle.

4. Calixarène selon la revendication 1 ou 2, dans lequel R¹ et R² représente le groupe éthoxy.

5. Calixarène selon la revendication 1 ou 2, dans lequel R¹ représente le groupe éthoxy et R² représente le groupe phényle

6. Procédé de préparation d'un calixarène de formule : 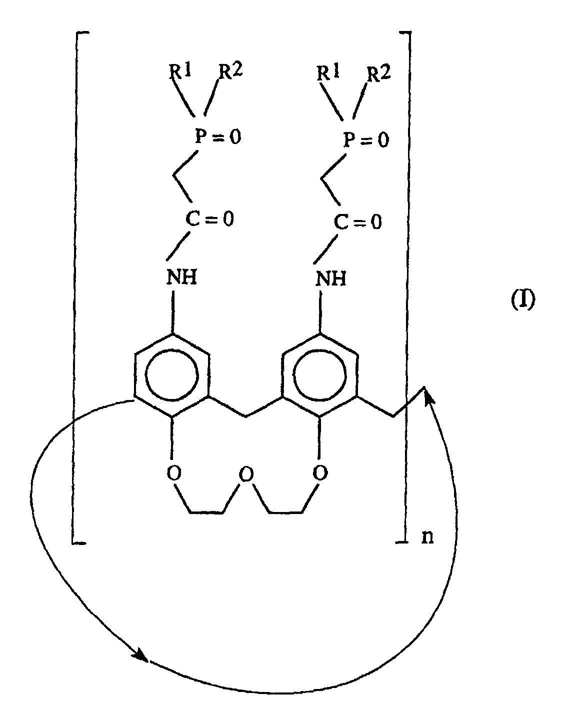 dans laquelle R¹ et R² qui peuvent être identiques ou différents, sont des groupes alkyle, alcoxy ou aryle, et n est un nombre entier égal à 2, 3 ou 4, comprenant les étapes suivantes :
a) nitration d'un calixarène de formule : 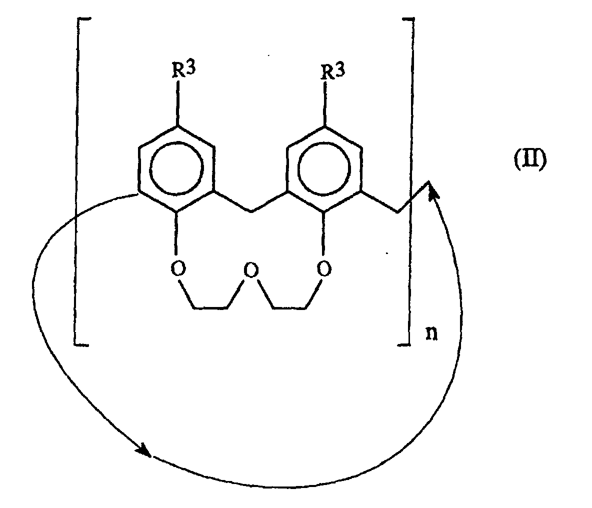 dans laquelle R³ représente un groupe alkyle et n est tel que défini ci-dessus, pour obtenir le dérivé nitro de formule : 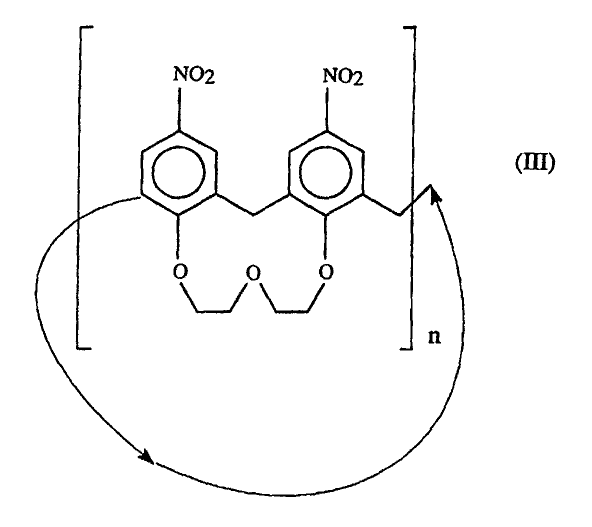
b) réduction du dérivé nitro de formule (III) en dérivé amino de formule : 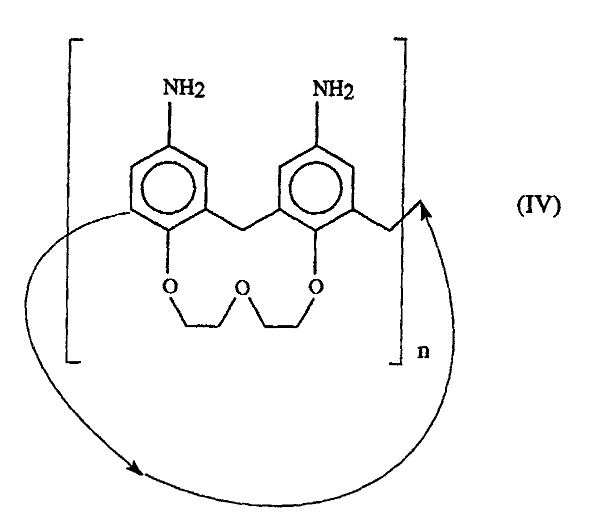
c) réaction du dérivé amino de formule (IV) avec un phosphinoxydo acétate de formule : 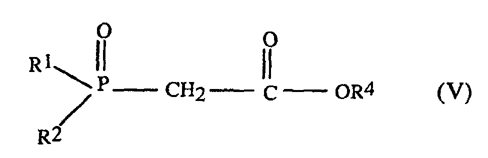
dans laquelle R¹ et R² sont tels que définis ci-dessus, et R⁴ représente le groupe p-nitrophényle ou 2,4-dinitrophényle.

7. Procédé de préparation d'un calixarène de formule : 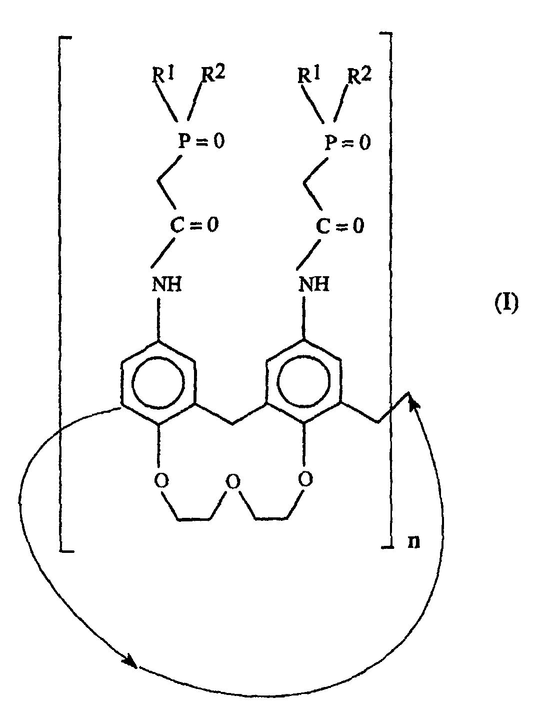 dans laquelle R¹ est un groupe alkyle, alcoxy ou aryle, R² est un groupe alcoxy et n est un nombre entier égal à 2, 3 ou 4, comprenant les étapes suivantes :
a) nitration d'un calixarène de formule : 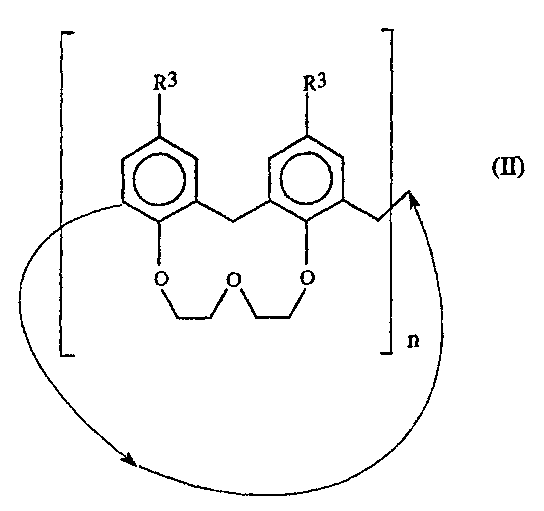 dans laquelle R³ représente un groupe alkyle et n est tel que défini ci-dessus, pour obtenir le dérivé nitro de formule : 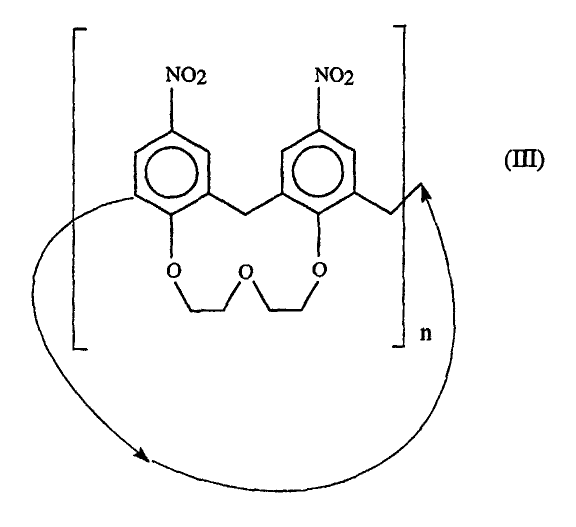
b) réduction du dérivé nitro de formule (III) en dérivé amino de formule : 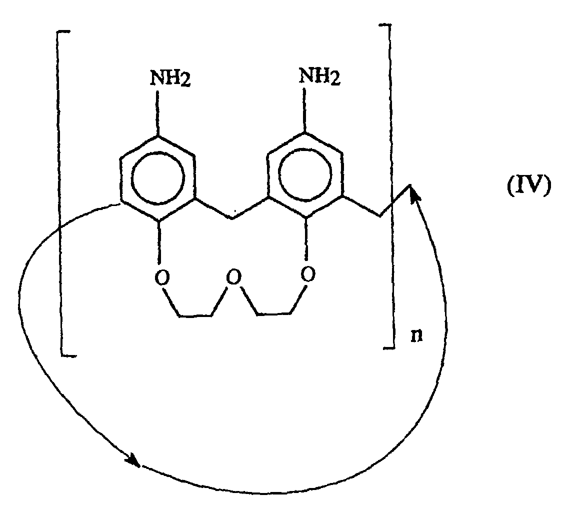
c) réaction du dérivé amino de formule (IV) avec du chlorure de bromoacétyle de formule :
BrCH₂COCl (VI)
pour obtenir le dérivé de calixarène de formule : 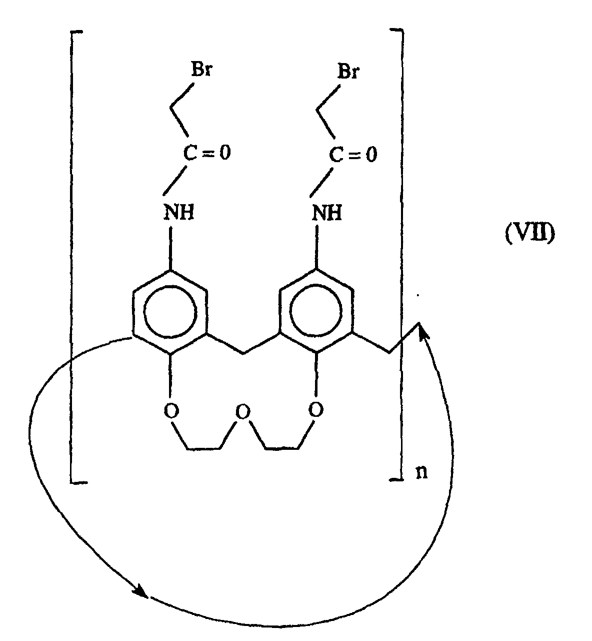
d) réaction du dérivé de formule (VII) avec un phosphonate ou phosphinate de formule :
R¹ - P - (R²)₂ (VIII)
dans laquelle R¹ est un groupe alkyle, alcoxy ou aryle et R² est un groupe alcoxy.

8. Procédé pour séparer au moins un métal choisi parmi les lanthanides et les actinides présents dans une solution aqueuse, qui consiste à mettre en contact la solution aqueuse avec une phase immiscible comprenant au moins un calixarène de formule : 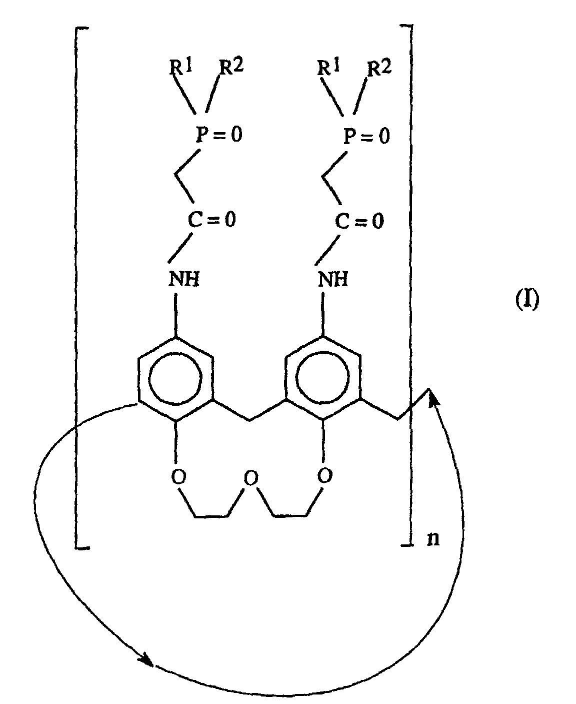 dans laquelle R¹ et R² qui peuvent être identiques ou différents, sont des groupes alkyle, alcoxy ou aryle, et n est un nombre entier égal à 2, 3 ou 4, pour extraire le (les) métal (métaux) dans la phase immiscible.

9. Procédé selon la revendication 8, dans lequel la solution aqueuse est une solution nitrique contenant 1 à 4 mol/l de HNO₃.

10. Procédé selon la revendication 8 ou 9, dans lequel la phase immiscible est une solution du (des) calixarène(s) de formule (I) dans un solvant organique.

11. Procédé selon la revendication 10, dans lequel le solvant organique est un nitrophényl alkyl éther.

## Patentansprüche

1. Calixaren der Formel: 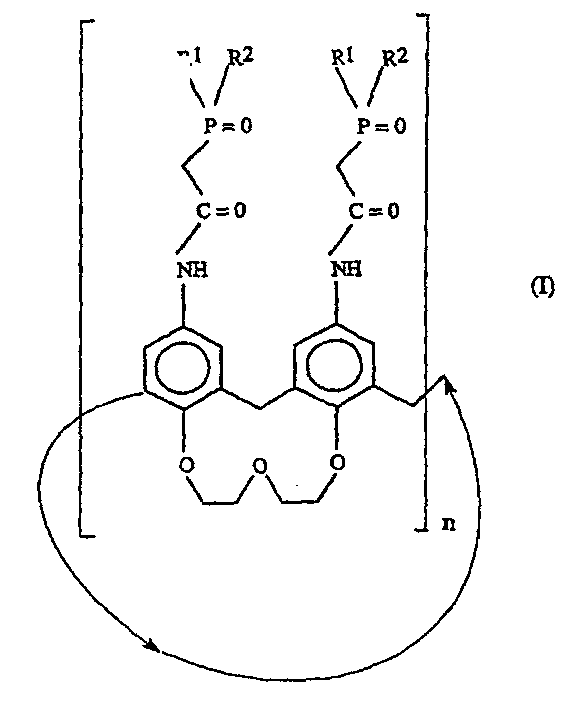 in welcher R¹ und R², die identisch oder verschieden sein können, Alkyl-, Alkoxy- oder Arylgruppen sind und n eine ganze Zahl gleich 2, 3 oder 4 ist.

2. Calixaren nach Anspruch 1, in welchem n gleich 2 ist.

3. Calixaren nach Anspruch 1 oder 2, in welchem R¹ und R² die Phenylgruppe darstellen.

4. Calixaren nach Anspruch 1 oder 2, in welchem R¹ und R² die Ethoxygruppe darstellen.

5. Calixaren nach Anspruch 1 oder 2, in welchem R¹ die Ethoxygruppe darstellt und R² die Phenylgruppe darstellt.

6. Verfahren zur Herstellung eines Calixarens der Formel: 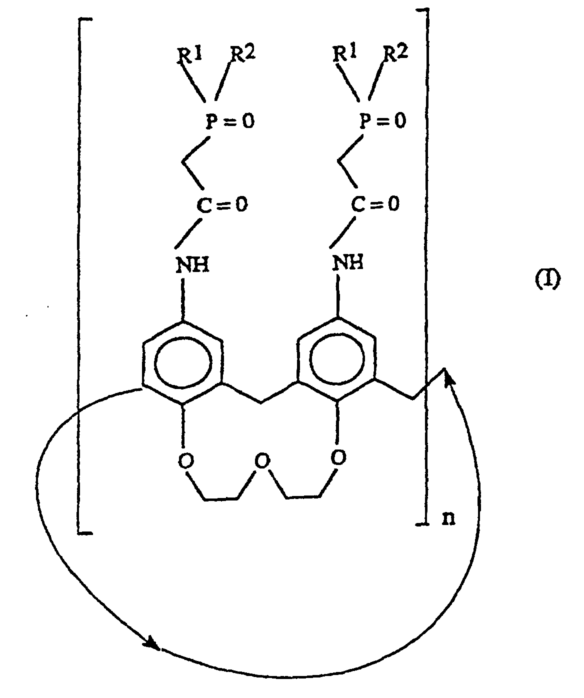 in welcher R¹ und R², die identisch oder verschieden sein können, Alkyl-, Alkoxy- oder Arylgruppen sein können und n eine ganze Zahl gleich 2, 3 oder 4 ist, das die folgenden Schritte umfasst:
b) Reduktion des Nitroderivats der Formel (III) zu einem Aminoderivat der Formel: 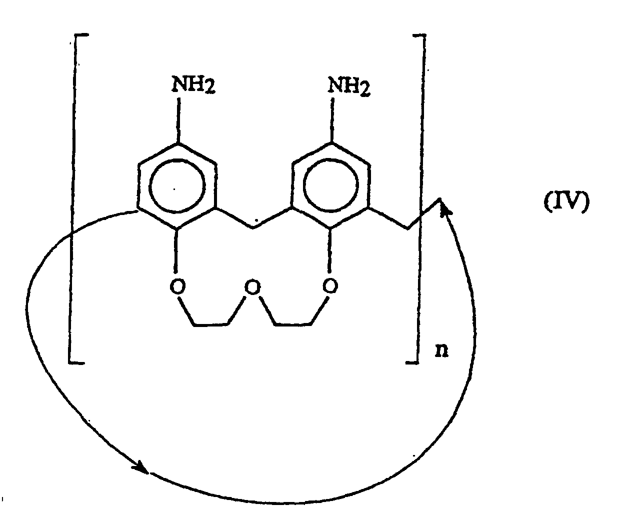
c) Reaktion des Aminoderivats der Formel (IV) mit einem Phosphinoxidoacetat der Formel: 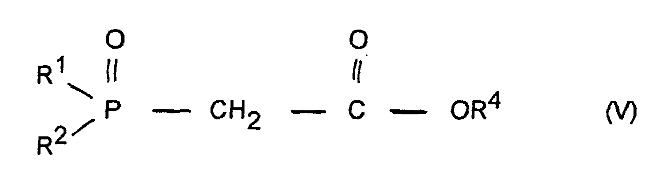
in welcher R¹ und R² wie oben definiert sind und R⁴ die p-Nitrophenylgruppe oder 2,4-Dinitrophenylgruppe darstellt.

7. Verfahren zur Herstellung eine Calixarens der Formel: 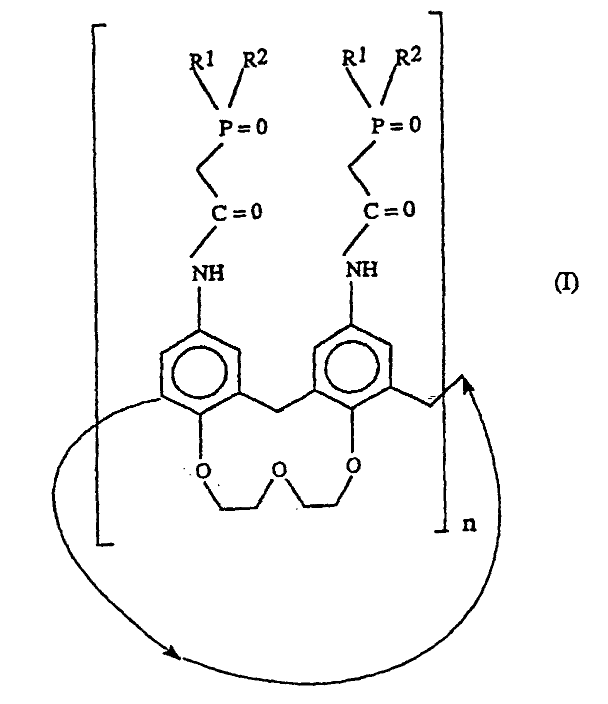 in welcher R¹ eine Alkyl-, Alkoxy- oder Arylgruppe ist, R² eine Alkoxygruppe ist und n eine ganze Zahl gleich 2, 3, oder 4 ist, das die folgenden Schritte umfasst:
a) Nitrierung eines Calixarens der Formel: 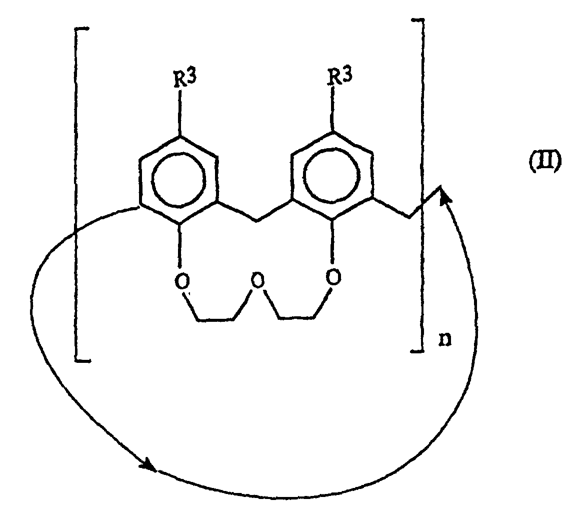 in welcher R³ eine Alkylgruppe darstellt und n wie oben definiert ist, um das Nitroderivat der Formel: 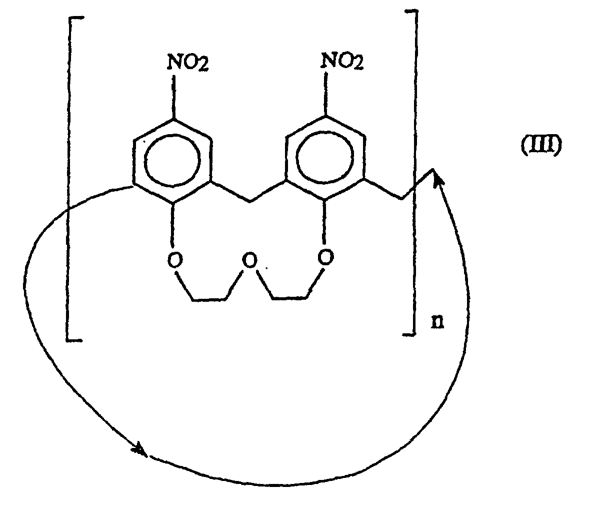 zu erhalten,
b) Reduktion des Nitroderivats der Formel (III) zu einem Aminoderivat der Formel: 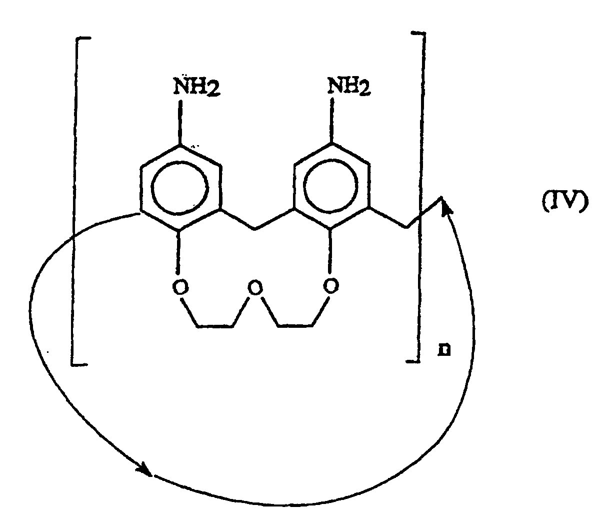
c) Reaktion des Aminoderivats der Formel (IV) mit Bromacetylchlorid der Formel:
BrCH₂COCl (VI)
um das Calixarenderivat der Formel: 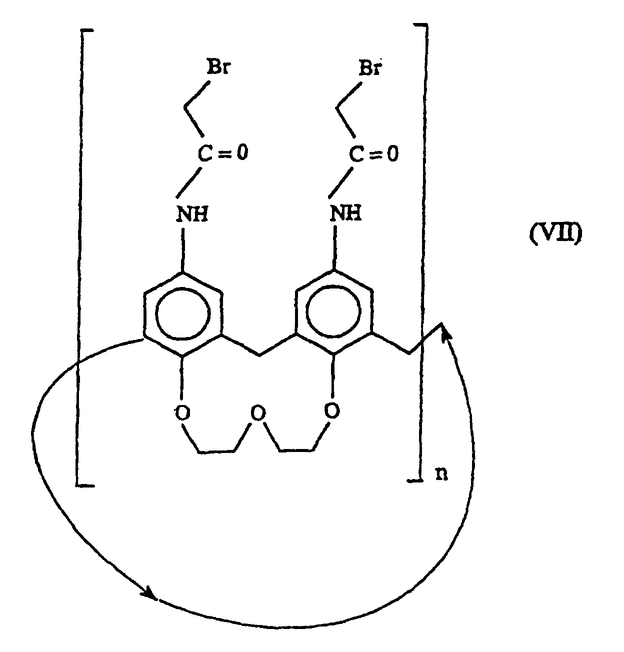 zu erhalten,
d) Reaktion des Derivats der Formel (VII) mit einem Phosphonat oder Phosphinat der Formel:
R¹ ― P ― (R²)₂ (VIII)
in welcher R¹ eine Alkyl-, Alkoxy- oder Arylgruppe ist und R² eine Alkoxygruppe ist.

8. Verfahren, um wenigstens ein Metall, gewählt unter den Lanthaniden und den Actiniden, die in einer wässrigen Lösung vorhanden sind, abzutrennen, das darin besteht, die wässrige Lösung mit einer nicht mischbaren Phase in Kontakt zu bringen, die wenigstens ein Calixaren der Formel: 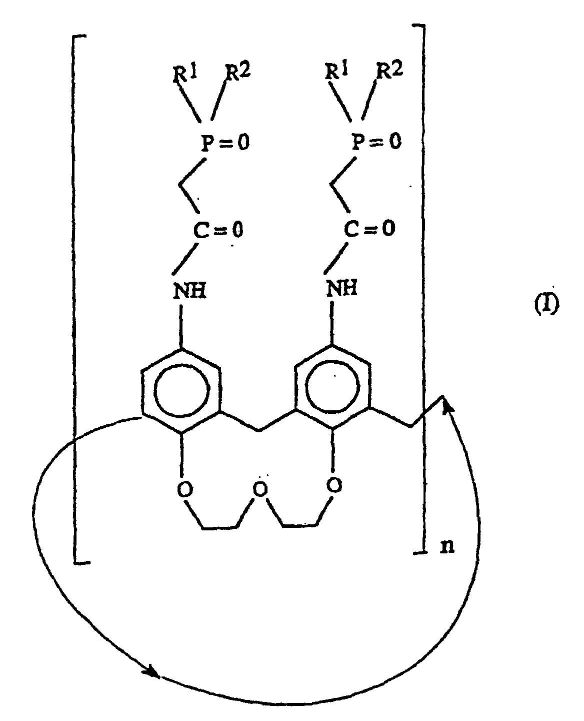 umfasst,
in welcher R¹ und R², die identisch oder verschieden sein können, Alkyl-, Alkoxy- oder Arylgruppen sind und n eine ganze Zahl gleich 2, 3 oder 4 ist,
um das oder die Metalle in die nicht mischbare Phase zu extrahieren.

9. Verfahren nach Anspruch 8, in welchem die wässrige Lösung eine salpetersaure Lösung ist, die 1 bis 4 mol/l HNO₃ enthält.

10. Verfahren nach Anspruch 8 oder 9, in welchem die nicht mischbare Phase eine Lösung des oder der Calixarene der Formel (I) in einem organischen Lösungsmittel ist.

11. Verfahren nach Anspruch 10, in welchem das organische Lösungsmittel ein Nitrophenylalkylether ist.

## Claims

1. Calixarene according to the formula: 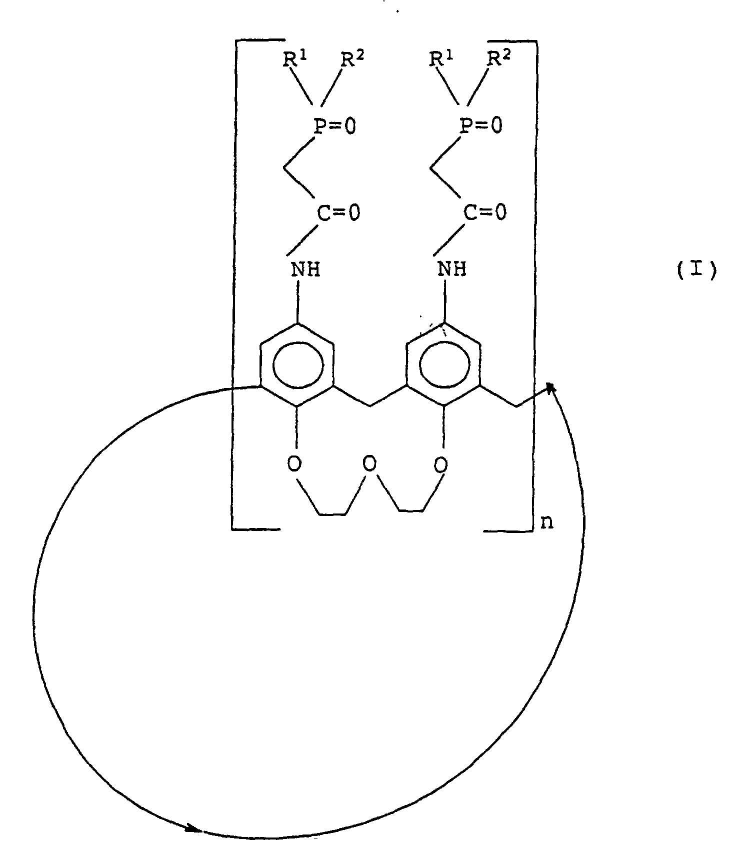 wherein R¹ and R², which may be identical or different, are alkyl, alcoxy or aryl groups, and n is an integer equal to 2, 3 or 4.

2. Calixarene according to claim 1, wherein n is equal to 2.

3. Calixarene according to claim 1 or 2, wherein R¹ and R² represent the phenyl group.

4. Calixarene according to claim 1 or 2, wherein R¹ and R² represent the ethoxy group.

5. Calixarene according to claim 1 or 2, wherein R¹ represents the ethoxy group and R² represents the phenyl group.

6. Method to prepare a calixarene according to the formula: 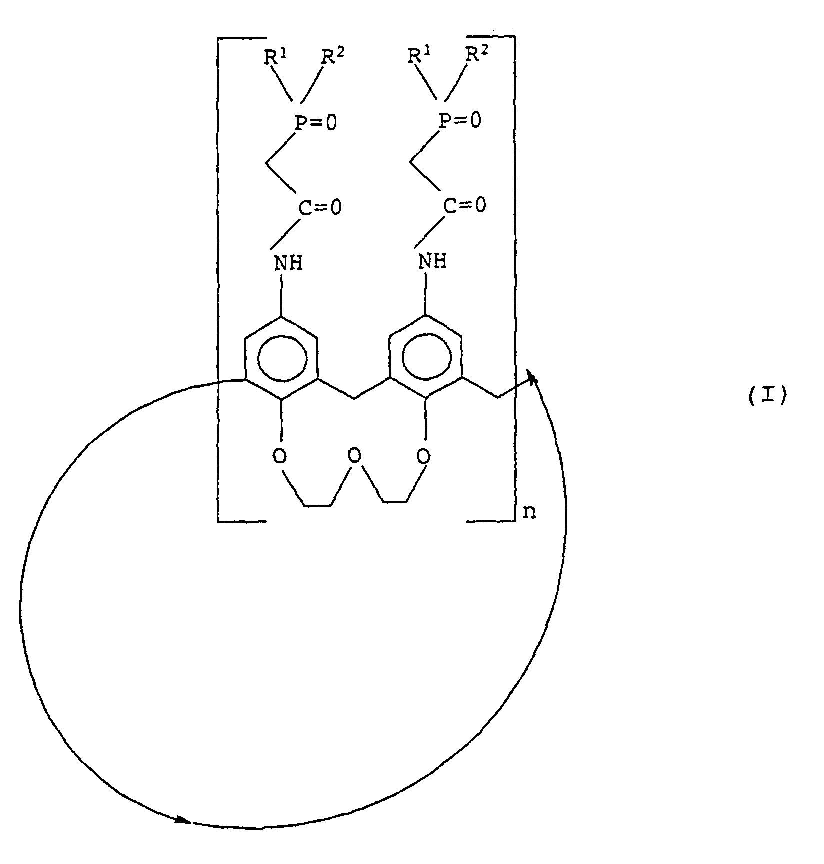 wherein R¹ and R², which may be identical or different, are alkyl, alcoxy or aryl groups, and n is an integer equal to 2, 3 or 4, comprising the following steps:
a) nitration of a calixarene according to the formula: 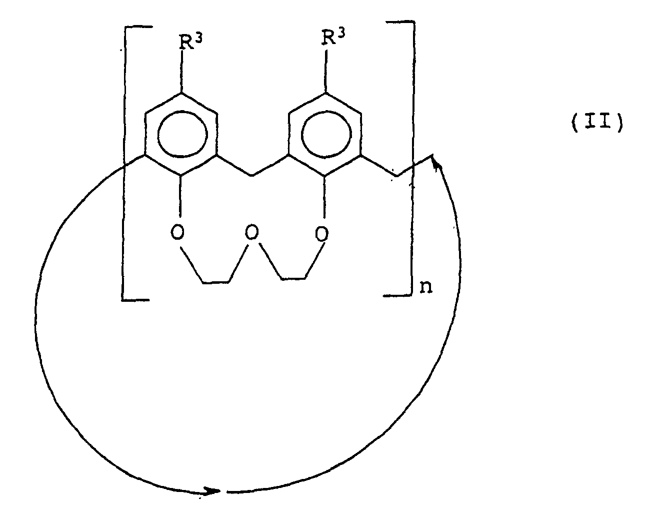 wherein R³ represents an alkyl group and n is as defined above, to obtain the nitro derivative according to the formula: 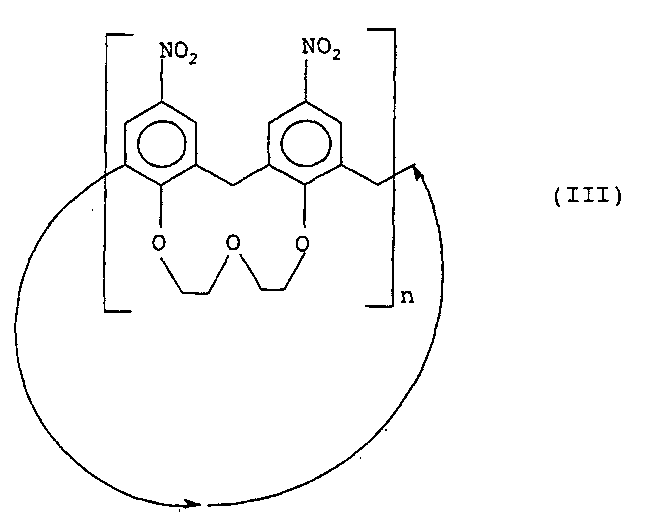
b) reduction of the nitro derivative according to formula (III) into an amino derivative according to the formula: 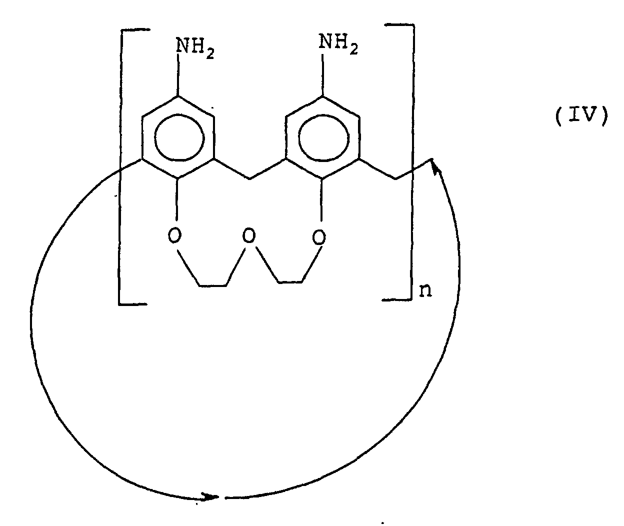
c) reaction of the amino derivative according to formula IV with a phosphinoxide acetate according to the formula: 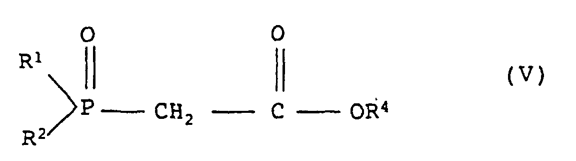
wherein R¹ and R² are as defined above, and R⁴ represents the p-nitrophenyl or 2,4 dinitrophenyl group.

7. Method to prepare a calixarene according to the formula: 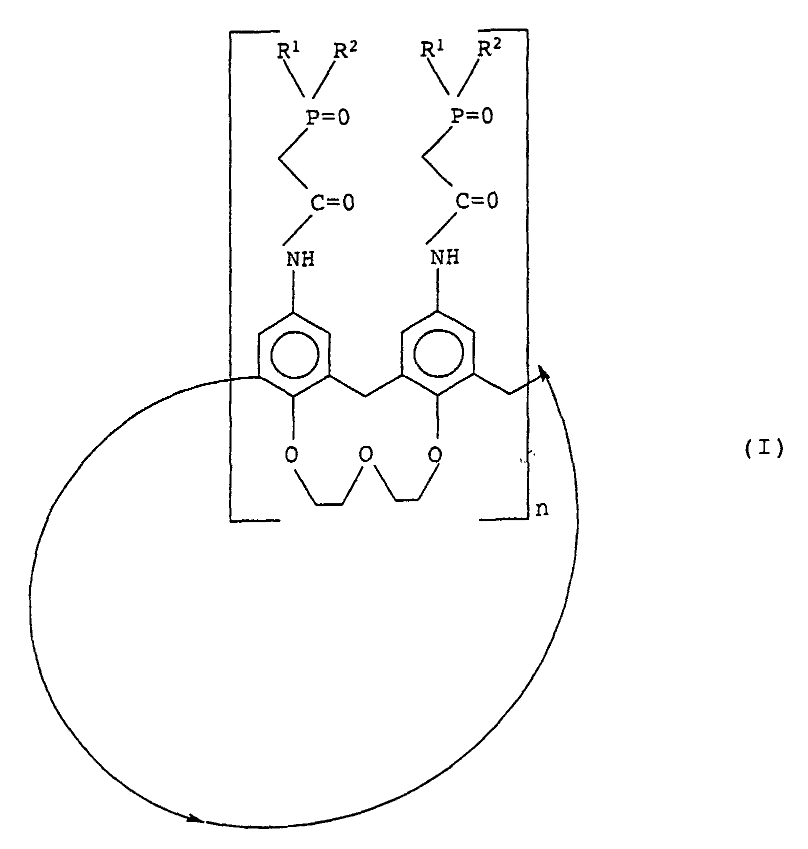 wherein R¹ is an alkyl, alcoxy or aryl group, R² is an alcoxy group, and n is an integer equal to 2, 3 or 4, comprising the following steps:
a) nitration of a calixarene according to the formula: 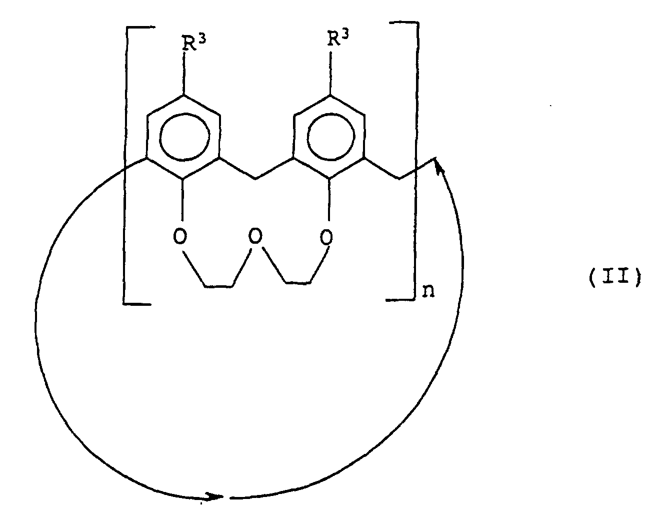 wherein R³ represents an alkyl group and n is as defined above, to obtain the nitro derivative according to the formula: 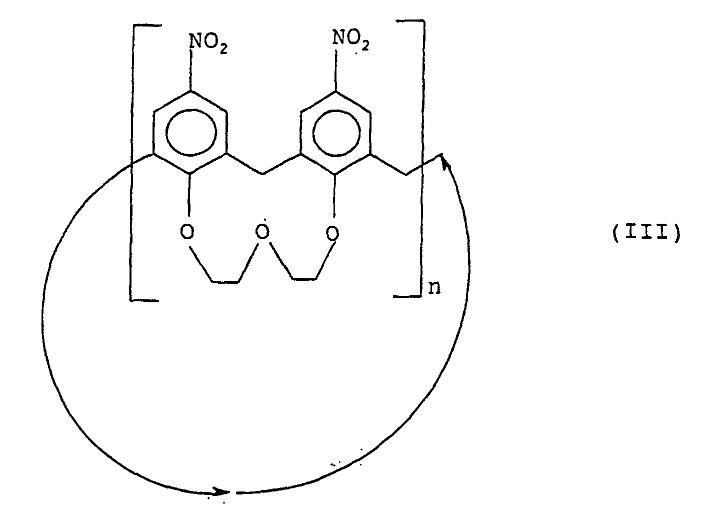
b) reduction of the nitro derivative according to formula (III) into an amino derivative according to the formula: 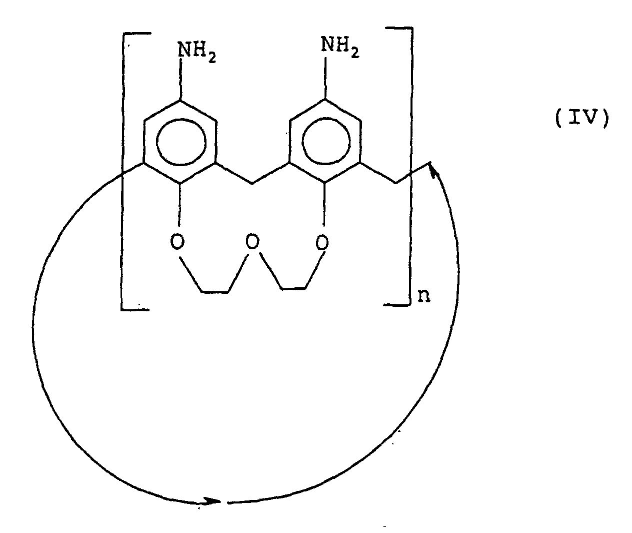
c) reaction of the amino derivative according to formula (IV) with bromoactyl chloride according to the formula:
BrCH₂COCl (VI)
to obtain the calixarene derivative according to the formula: 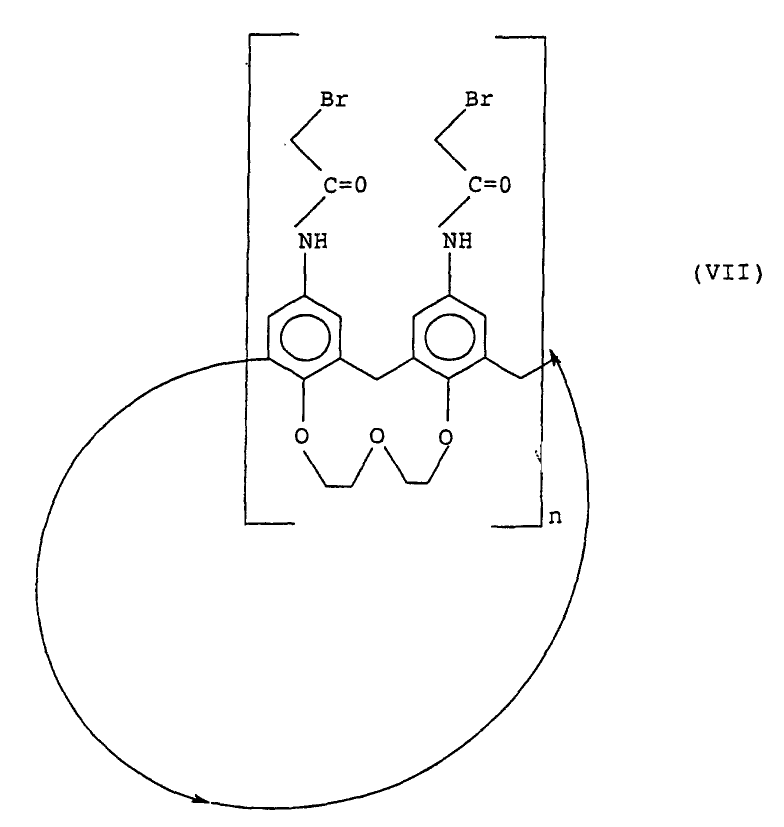
d) reaction of the derivative according to formula (VII) with a phosphonate or phosphinate according to the formula:
R¹ - P - (R²)₂ (VIII)
wherein R¹ is an alkyl, alcoxy or aryl group and R² is an alcoxy group.

8. Method to separate at least one metal selected from actinides and lanthanides present in an aqueous solution, which consists of placing the aqueous solution in contact with a non-miscible phase comprising at least one calixarene according to the formula: 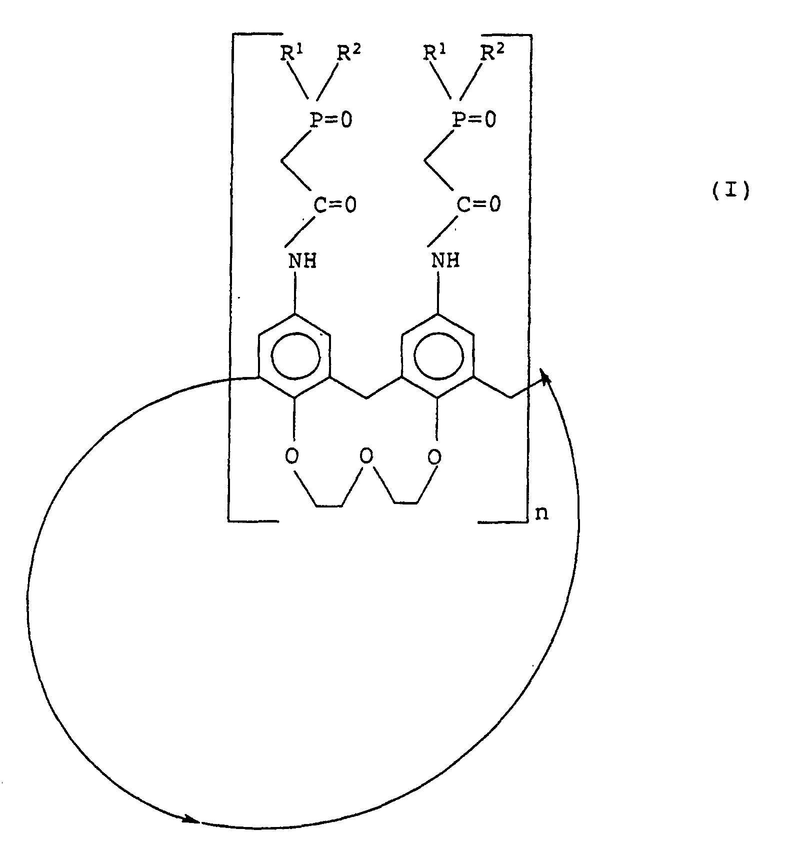 wherein R¹ and R², which may be identical or different, are alkyl, alcoxy or aryl groups, and n is an integer equal to 2, 3 or 4, to extract the metal(s) in the non-miscible phase.

9. Method according to claim 8, wherein the aqueous solution is a nitric solution containing 1 to 4 mol/l of HNO₃.

10. Method according to claim 8 or 9, wherein the non-miscible phase is a solution of calixarene(s) according to formula (I) in an organic solvent.

11. Method according to claim 10, wherein the organic solvent is a nitrophenyl alkyl ether.
